# EUROPÄISCHE PATENTSCHRIFT

(11) **EP 0 491 246 B1**
(45) Veröffentlichungstag und Bekanntmachung des Hinweises auf die Patenterteilung: **05.04.1995**
(21) Anmeldenummer: 91120938.5
(22) Anmeldetag: 06.12.1991
(51) Int. Cl.: G01F 3/10

(54) **Volumensensor für Flüssigkeiten**
Volume sensor for fluids
Capteur du volume pour fluides

(30) Priorität: 18.12.1990 DE 4040409
(43) Veröffentlichungstag der Anmeldung: 24.06.1992
(73) Patentinhaber: VSE VOLUMENTECHNIK GmbH, D-58809 Neuenrade (DE)
(72) Erfinder: Schumacher, Hans, W-5980 Werdohl (DE)
(74) Vertreter: Gralfs, Harro, Dipl.-Ing. Patentanwalt

(56) Entgegenhaltungen:
- EP-A- 0 393 294
- DE-A- 2 801 281
- DE-A- 2 810 563
- DE-A- 3 666 152
- US-A- 1 129 090
- US-1129090

## Beschreibung

Die Erfindung bezieht sich auf einen Volumensensor für Flüssigkeiten nach dem Oberbegriff des Patentanspruches 1.

Volumensensoren der gattungsgemäßen Art messen jeweils durch die Verzahnung vorgegebene Teilmengen. Für jede Teilmenge wird dabei über den magnetoelektrischen Sensor ein Signalimpuls abgegeben. Auf diese Weise läßt sich eine einfache Messung durch Addition von elektrischen Impulsen durchführen denen jeweils eine vorgegebene Flüssigkeitsmenge zugeordnet ist (EP-A-393 294, DE-GM 66 09 610, DE-AS 25 54 466, DE-PS 31 47 208).

Solche gattungsgemäßen Volumensensoren werden häufig, so auch in den oben genannten Schriften, als Volumensensoren "nach Art eines Zahnradmotors" oder "nach Art einer Zahnradpumpe" bezeichnet.

DE-A-28 10 563 beschreibt die Probleme konventioneller Zahnradpumpen mit Geradverzahnung, bei denen der die Strömungswege zum Druck- bzw. Saugraum trennende Steg symmetrisch zum Mittelpunkt der Mittellinie, die die beiden Zahnradachsen verbindet, ausgeführt ist. Um das Problem, daß es aufgrund der Kompression und Dekompression der Druckflüssigkeit im Quetschölraum zu Druckpulsationen, Kavitation und Geräuschentwicklung kommt, zu lösen, schlägt diese Schrift vor, Zahnräder mit Schrägverzahnung zu verwenden und die beiderseitigen Stege in geeigneter Weise gegenüber der Mittellinie versetzt anzuordnen. Zusätzlich wird vorgeschlagen, an den Stegen Einkerbungen anzubringen, die von den Fußkreisen und den fußkreisseitigen Konturen der Zahnflanke bei demjenigen Verdrehungswinkel gebildet sind, bei dem die Fläche einer eingeschlossenen Zahnlücke in Radmitte ihr Minimum erreicht.

DE-A-366152 und US-A-1 129 090 beschäftigen sich ebenfalls mit konventionellen, geradverzahnten Zahnradpumpen und ebenfalls mit der Frage, wie die Quetschung des zwischen den Zähnen eingeschlossenen Öls vermindert werden kann. Zur Lösung wird vorgeschlagen, den Zahngrund zwischen den Zähnen zu vertiefen und den Steg in spezieller Weise asymmetrisch zur die Zahnradachsen verbindenden Linie auszuführen.

Volumensensoren der gattungsgemäßen Art werden in flüssigkeitsführende Leitungen eingesetzt, und der Antrieb der Zahnräder erfolgt durch die strömende Flüssigkeit. Dabei kommt es insbesondere bei Verwendung von Zahnrädern mit kleinem Modul und damit kleinen meßbaren Teilmengen bei größeren Durchflußmengen zu einer starken Erhöhung des Durchflußwiderstandes und damit zu einer Drosselung des Flüssigkeitsstromes, welche den Meßbereich nach oben begrenzt. Daneben ist bisher auch eine erhebliche Geräuschentwicklung nicht vermeidbar, die äußerst störend ist.

Aufgabe der Erfindung ist es, einen Volumensensor der genannten Art so auszugestalten, daß sowohl der Durchflußwiderstand als auch die Geräuschentwicklung wesentlich verringert werden.

Diese Aufgabe wird gemäß der Erfindung gelöst durch die im kennzeichnenden Teil des Patentanspruches 1 herausgestellten Merkmale.

Zweckmäßige Ausgestaltungen dieser Erfindung sind Gegenstand der Unteransprüche 2 bis 6.

Die Erfindung ist in der Zeichnung beispielsweise veranschaulicht und im Nachstehenden im einzelnen anhand der Zeichnung beschrieben. In der Zeichnung zeigen:
- Fig. 1: einen Volumensensor im Längsschnitt durch die Achsenebene;
- Fig. 2: einen Halbschnitt entlang der Linie II-II in Fig. 1;
- Fig. 3: ein Meßwerkrad im axialen Teilschnitt durch eine Zahnlücke;
- Fig. 4: eine Draufsicht auf den Eingriffsbereich der Meßwerkräder in der Ausführung gemäß Fig. 3;
- Fig. 5: eine Draufsicht auf den Eingriffsbereich der Meßwerkräder in einer weiteren Ausführungsart der Meßwerkräder;

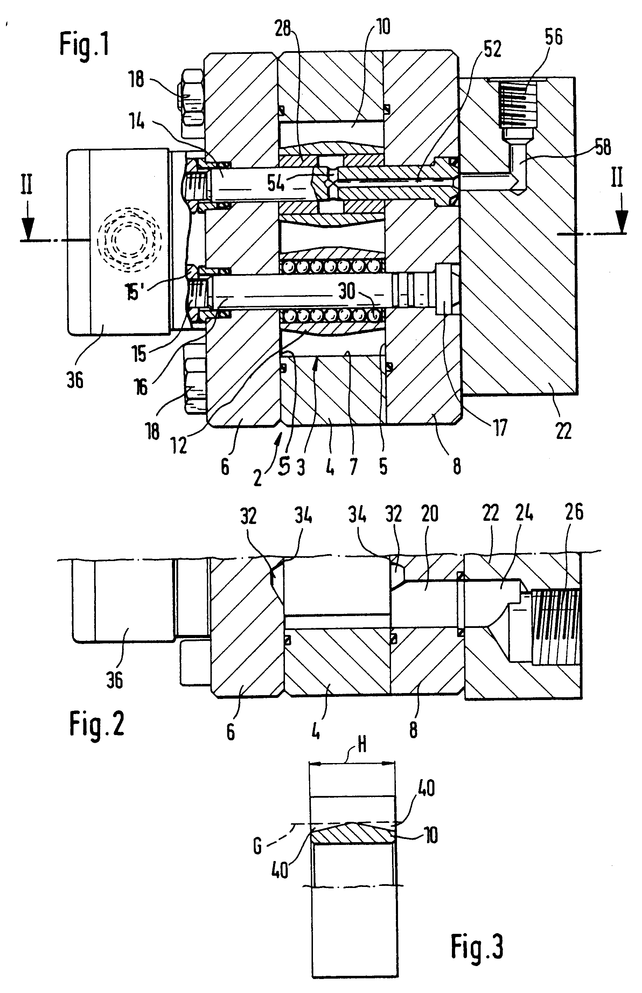

Der in Fig. 1 im Längsschnitt durch die Achsenebene dargestellte Volumensensor weist ein Gehäuse 2 mit einem mittleren Gehäuseteil 4 und zwei Gehäusedeckeln 6, 8 auf. In dem Gehäuse 2 ist eine Meßkammer 3 ausgebildet, in der zwei runde, geradverzahnte Zahnräder als Meßwerkräder 10, 12 auf feststehenden Achsen 14, 16 frei drehbar gelagert sind. Die Gehäusedeckel 6, 8, an denen jeweils die Meßkammerstirnwände 5, 7 ausgebildet sind, und das Gehäuseteil 4 mit der Umfangswand 7 der Meßkammer sind über Schrauben 18 abdichtend zusammengehalten. Zur Abdichtung sind an sich bekannte Dichtungsmittel vorgesehen.

Der Gehäusedeckel 8 ist mit Zu- bzw. Ablaufbohrungen 20 versehen, die parallel zu den Achsen 14, 16 und gegen die in Fig. 1 dargestellte Mittelebene versetzt angeordnet sind. Die Anordnung ist in Fig. 2 dargestellt. Der Volumensensor ist wie dargestellt mit einer Anschlußplatte 22 verbunden, die Zu- und Ablaufbohrungen 24 aufweist, die mit den Bohrungen 20 fluchten und mit Anschlußbohrungen 26 in Verbindung stehen. Die weiteren Bohrungen sind jeweils spielgelbildlich zu den Bohrungen 20, 24 und 26 in der in Fig. 2 nicht dargestellten Gehäusehälfte angeordnet.

Die Meßwerkräder 10, 12 sind auf den feststehenden Achsen 14, 16 über Lagerelemente gelagert. Hierfür können, wie in Fig. 1 oben dargestellt, Gleitlager 28 oder, wie in Fig. 1 unten dargestellt, Kugellager 30 vorgesehen sein. Die Lagerung erfolgt jeweils über zwei im Abstand voneinander liegende Lager.

Die Meßwerkräder sind in dem Gehäuse 2 so eingepaßt, daß sie allseitig mit einem geringen Spiel in der Meßkammer umlaufen.

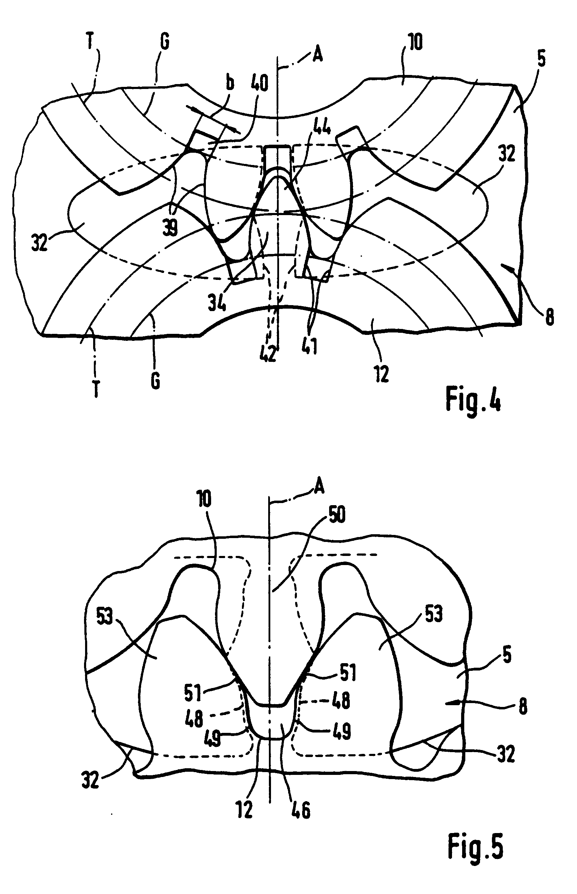

Im Bereich des Zahneingriffs, der in Fig. 4 dargestellt ist, sind in den Meßkammerstirnwänden an beiden Gehäusedeckeln 6 bzw. 8 Strömungswege 32 beidseitig der Achsebene vorgesehen, zwischen denen jeweils in der Achsebene liegende Stege 34 vorgesehen sind, auf die weiter unten einzugehen sein wird. Die Strömungswege 32 sind einerseits mit der Zulaufseite und andererseits mit der Ablaufseite des Volumensensors verbunden.

In einem der Gehäusedeckel, hier dem Gehäusedeckel 6, ist ein magneto-elektrischer Sensor angeordnet, der über dem Zahnkranz eines der beiden Meßwerkräder 10, 12 liegt und der für jeden unter ihm durchlaufenden Zahn ein elektrisches Signal abgibt. Als Anschluß für den Sensor ist in Fig. 1 ein Anschlußkasten 36 dargestellt.

Wie aus Fig. 3 und 4 ersichtlich, sind die Meßwerkräder auf beiden Seiten in den Zahnlücken mit einer sich über den Zahnlückengrund (Fußkreis G) radial einwärts erstreckenden Vertiefung 40 versehen. Die Breite b dieser Vertiefung entspricht im wesentlichen der Zahnlückenbreite im Bereich des Fußkreises G des Meßwerkrades. Diese Vertiefung kann sich über die ganze Höhe H des Rades erstrecken. Sie kann aber auch so angeordnet sein, daß sie sich nur über einen Teil der Radhöhe H erstreckt. Die Vertiefung kann dabei, wie in Fig. 3 dargestellt, von der Mitte des Rades ausgehend zu den Stirnseiten des Rades hin beidseitig abfallen. Aus Fertigungsgründen kann es zweckmäßig sein, die Vertiefungen des Zahnlückengrundes mit parallelen geraden Seitenflanken auszubilden. Die Vertiefung läßt sich dann durch Stoßen oder Schleifen herstellen.

Ein wesentliches Merkmal der Erfindung ist die Ausgestaltung der Stege 34 in der Achsebene. Wie in Fig. 4 dargestellt, sind die beiden Ränder 42 des Steges 34 so ausgebildet, daß jeweils bei Mittellage der Zahnlücke der beiden Meßwerkräder in der Achsebene A eine weitgehende Übereinstimmung in der Form zwischen den Flanken 41 der Vertiefung 40 des Zahnlückengrundes und den daran anschließenden Flanken 39 zweier benachbarter Zähne bis zum Teilkreis T einerseits und den beidseitigen Rändern 42 des Steges 34 andererseits gegeben ist, wie es in Fig. 4 für das Meßwerkrad 10 veranschaulicht ist. Die kongruente Figuration ist dabei konkret so auszuführen, daß eine geringe positive Überdeckung der Stegränder durch die Flanken der Vertiefung und der benachbarten Zähne 42 bei exakter Mittellage des dazwischen eingreifenden Zahnes des anderes Rades gegeben ist, also die Breite der Zahnlücke in diesem Bereich geringfügig kleiner ist als die Stegbreite. Diese Überdeckung sollte dabei in der Größenordnung des Spiels liegen, mit dem das Zahnrad mit seinen Stirnseiten und seinem Umfang in das Meßwerkgehäuse eingepaßt ist. Dies ist in Fig. 4 durch den geringen Abstand der gestrichelt dargestellten Ränder veranschaulicht. Eine optimale Ausbildung der Ränder wird erreicht, wenn diese Ränder so angeordnet und die Überdeckung so bemessen ist, daß bis etwa 1° vor Erreichen der Mittellage noch ein offener Spalt vorliegt, der bei der beschriebenen Ausführungsform sich vom Boden der Vertiefung bis zum Teilkreis erstreckt, also über die größtmögliche Länge. Es kann dann bis kurz vor Erreichen der Mittelstellung Flüssigkeit abfließen.

Dadurch, daß bis unmittelbar vor Einnahme der Mittellage aus dem durch die drei in Fig. 4 dargestellten Zähne eingeschlossenen Raum Flüssigkeit abströmen kann, bevor in der Mittellage die Überdeckung des Steges und damit ein vollständiger Abschluß dieses Raumes erreicht wird, und auf dem etwa 1° großen Drehwinkel praktisch keine Verdrängerwirkung mehr durch den in die Mittellage gelangenden Zahn 44 vorhanden ist, wird die eingeschlossene Flüssigkeit praktisch ohne Druckerhöhung von der Ausströmseite des Volumensensors zur Einströmseite transportiert. Damit wird der bei bekannten Volumensensoren stark ansteigende Durchflußwiderstand über den Meßbereich wesentlich herabgesetzt. Praktische Versuche haben gezeigt, daß Volumensensoren mit der beschriebenen Ausgestaltung des Steges über einen sehr weiten Meßbereich mit niedrigem Durchflußwiderstand betreibbar sind. Hierzu trägt offenbar auch bei, daß sich durch die Vertiefungen 40 das Gesamtvolumen des Einschlußraumes vergrößert und damit das Kompressionsverhältnis, d. h. das Verhältnis von Verdrängervolumen gegeben durch die Zahnspitze oberhalb des Teilkreises zum gesamten eingeschlossenen Flüssigkeitsvolumen, verkleinert wird. Es wird also die Kompressionsarbeit, die überwiegend für den Durchflußwiderstand verantwortlich ist, wesentlich herabgesetzt.

Durch die Vermeidung von Kompressionen und Dekompressionen der zwischen den Zähnen eingeschlossenen Flüssigkeit kommt es gleichzeitig zu einer starken Reduzierung des abgestrahlten Geräusches. Zu berücksichtigen ist dabei, daß die Meßwerkräder in Volumensensoren der vorliegenden Art zur Erzielung einer hohen Auflösung mit kleinen Zähnen ausgebildet werden und unter der Voraussetzung einer möglichst kleinen Bauweise mit sehr hohen Drehzahlen laufen, die bei den bekannten Sensoren zu den störenden Geräuschen im Mittelfrequenzbereich führen. So ist beispielsweise ein Zahndurchgang durch die Lücke des Gegenrades in weniger als 1 ms üblich.

Durch die Ausbildung der Ränder des Steges und die geringe Stegüberdeckung kommt es nach Überschreiten der Mittellage zu einem sehr schnellen Öffnen eines großen Eintrittsquerschnittes, so daß der eingeschlossene Raum auf der Einlaßseite des Volumensensors sehr schnell wieder gefüllt wird und es nicht zu Unterdrücken in dem eingeschlossenen Raum kommt, bevor eine vollständige Füllung erfolgt ist. Auch hier wirkt sich positiv aus, daß ein relativ großes Flüssigkeitsvolumen von der Auslaß- zur Einlaßseite transportiert wird.

In Fig. 5 ist eine abgewandelte Ausführungsform der Vertiefungen 46 am Boden der Zahnlücke dargestellt. Die Vertiefungen 46 sind hier mittels eines Protuberanzenfräsers bei der Herstellung der Verzahnung gebildet. Die Vertiefung geht damit hier über die gesamte Radbreite. Wie aus der Zeichnung ersichtlich, sind die Ränder 48 des Steges 50 wiederum so ausgebildet, daß jeweils bei der oben definierten Mittellage der Zähne der beiden Meßwerkräder eine weitgehende Kongruenz zwischen den Flanken 49 der Vertiefung 46 des Zahnlückengrundes und den gegenüberliegenden Flanken 51 der Zähne 53 bis zum Teilkreis einerseits und den Rändern 48 des Steges 50 andererseits bei geringer positiver Überdeckung der Stegränder durch die Zähne 53 des Meßwerkrades 12 gegeben ist.

Bei der in Fig. 1 dargestellten Ausführungsform sind die feststehenden Achsbolzen 14, 16 durch die beiden Gehäusedeckel hindurchgeführt und auf der Außenseite mit Widerlagern versehen. So sind die Achsbolzen 14, 16 auf der einen Seite mit einem Kopf 17 versehen, der auf einer Schulter in einer Vertiefung in der Deckeloberfläche aufliegt. Das andere Ende der Achsbolzen ist mit einem Gewinde 15 versehen, auf das eine Mutter 15' aufschraubbar ist. Durch die so gebildeten Widerlager werden die beiden Gehäusedeckel im Bereich der Zahnräder und damit des druckbeaufschlagten Innenraumes zusätzlich verspannt, so daß auch bei hohen Drücken, die in der Hydraulik 400 bar überschreiten können, keine Änderung des stirnseitigen Spiels der Meßwerkräder auftritt.

Der obere Achsbolzen 14 ist mit einer axialen Bohrung 52 dargestellt, die in einer Querbohrung 54 mündet, die zwischen den beiden Lagerelementen 28 liegt. Über einen Anschluß 56 und eine daran anschließende Bohrung 58 in der Anschlußplatte 22 kann zwischen die Lagerelemente 28 eine Spülflüssigkeit eingeführt werden. Dies ist beispielsweise zweckmäßig, wenn ein Volumensensor für eine längere Zeit stillgesetzt werden soll. Mit der Spülflüssigkeit lassen sich außer den Lagerelementen auch die Zwischenräume zwischen den Meßwerkrädern und dem Gehäuse reinigen.

## Patentansprüche

1. Volumensensor für Flüssigkeiten mit
im Außeneingriff miteinander kämmenden runden, geradverzahnten Meßwerkrädern (10, 12),
einer Meßkammer (3) in einem Gehäuse (2) mit zwei Deckelteilen (6, 8), in denen jeweils eine der Meßkammerstirnwände (5) ausgebildet ist, feststehenden Achsbolzen (14, 16), auf denen die Meßwerkräder (10, 12) in der Meßkammer drehbar gelagert sind,
im Bereich des Zahneingriffs der Meßwerkräder (10,12) beiderseits der Achsebene (A) der beiden Meßwerkräder mündenden Strömungswegen (32) in wenigstens einer der Meßkammerstirnwände, die mit einem Zulauf bzw. einem Ablauf (20) für die Flüssigkeit in Verbindung stehen,
einem diese Strömungswege (32) trennenden Steg (34), dessen Ränder (42) im wesentlichen symmetrisch zu der Achsebene (A) ausgebildet sind, und
einem in einer der Meßkammerstirnwände im Bereich der Zähne wenigstens eines Meßwerkrades in einer Bohrung in einem der Gehäusedeckelteile angeordneten Differentialfeldplattenfühler als magneto-elektrischem Sensor,
dadurch gekennzeichnet,
daß die Meßwerkräder (10, 12) wenigstens auf der den Strömungswegen (32) zugewandten Seite in ihren Zahnlücken mit einer sich über den Fußkreis radial einwärts erstreckenden und zur Zahnlücke symmetrischen Vertiefung (40) versehen sind, deren Breite (b) im wesentlichen der Zahnlückenbreite im Bereich des Fußkreises (G) der Verzahnung entspricht und die sich von der Stirnseite der Zähne ausgehend wenigstens über einen Teil der Breite (H) des Zahnrades erstreckt, und
daß der Steg (34) so ausgebildet ist, daß jeweils bei Mittellage einer Zahnlücke der beiden Meßwerkräder (10, 12) in der Achsebene die Ränder (42) des Steges mit den benachbarten Flanken (41, 39) der an die Zahnlücke angrenzenden Zähne im Bereich zwischen dem Boden der Vertiefung und dem Teilkreis (T) der Verzahnung im wesentlichen in ihrer Form übereinstimmen und die Breite der Zahnlücke in diesem Bereich geringfügig kleiner ist als die Stegbreite.

2. Volumensensor nach Anspruch 1, dadurch gekennzeichnet, daß die Vertiefungen (40) mit parallelen geraden Flanken (41) ausgebildet sind.

3. Volumensensor nach Anspruch 1, dadurch gekennzeichnet, daß die Vertiefungen (40) sich über die gesamte Radbreite (H) erstrecken.

4. Volumensensor nach Anspruch 1, dadurch gekennzeichnet, daß von beiden Stirnflächen der Meßwerkräder ausgehende Vertiefungen (40) vorgesehen sind, die sich zur Mitte des Rades wenigstens über einen Teil der Radbreite (H) abflachen.

5. Volumensensor nach Anspruch 1, dadurch gekennzeichnet, daß die feststehenden Achsbolzen (14, 16) die beiden Deckelteile (6, 8) durchdringen und an beiden Enden mit Widerlagern (15', 17) versehen sind, die außen gegen die Deckelteile anliegen.

6. Volumensensor nach Anspruch 5, bei dem die Meßwerkräder jeweils über im Abstand voneinander liegende Lager auf dem Achsbolzen gelagert sind, dadurch gekennzeichnet, daß der Achsbolzen (14) mit einer von einem Ende ausgehenden axialen Bohrung (52) versehen ist, die mit einer zwischen den Lagern mündenden Querbohrung und einem äußeren Anschluß für eine Spülflüssigkeit versehen ist.

## Claims

1. A volume sensor for liquids comprising
round straight-toothed meter wheels (10, 12) meshing in external engagement with one another,
a measuring chamber (3) in a casing (2) with two cover parts (6, 8) in each of which one of the measuring-chamber end walls (5) is formed,
stationary pivot pins (14, 16) on which the meter wheels (10, 12) in the measuring chamber are rotatably mounted,
flow paths (32) in at least one of the measuring-chamber end walls, the flow paths opening in the region of engagement of the teeth of the meter wheels (10, 12) on both sides of the pivot plane (A) of the two meter wheels, the flow paths being connected to an inlet and outlet (20) for the liquid,
a web (34) separating the flow paths (32), the edges (42) of the web being substantially symmetrical with the pivot plane (A), and
a differential magnetoresistor sensor serving as a magneto-electric sensor and disposed in one of the measuring-chamber end walls in the region of the teeth of at least one meter wheel in a bore in one of the casing cover parts,
characterised in that
the meter wheels (10, 12), at least on the side facing the flow paths (32), are formed in the tooth spaces with a recess (40) which extends radially inwards over the root circle and is symmetrical with the tooth space, the width (b) of the recess being substantially equal to the width of the tooth space in the region of the root circle (G) of the teeth, the recess extending from the end face of the teeth and at least over a part of the width (H) of the gearwheel, and
in that the web (34) is designed so that whenever a tooth space of the two meter wheels (10, 12) is in the centre position in the pivot plane, the edges (42) of the web substantially coincide in shape with the neighbouring flanks (41, 39) on the teeth adjacent the tooth space in the region between the base of the recess and the pitch circle (T) of the teeth, and the width of the tooth space in this region is slightly less than the width of the web.

2. A volume sensor according to claim 1, characterised in that the recesses (40) are formed with parallel straight flanks (41).

3. A volume sensor according to claim 1, characterised in that the recesses (40) extend over the entire width (H) of the wheel.

4. A volume sensor according to claim 1, characterised in that recesses (40) extending from both end surfaces of the meter wheels are provided and flatten towards the middle of the wheel, at least over part of the wheel width (H).

5. A volume sensor according to claim 1, characterised in that the stationary pivot pins (14, 16) extend through the two cover parts (6, 8) and are provided at both ends with abutments (15', 17) which externally abut the cover parts.

6. A volume sensor according to claim 5, in which the meter wheels are mounted on the pivot pins via respective spaced-apart bearings, characterised in that the pivot pin (14) is formed with an axial bore (52) starting at one end and provided with a transverse bore opening between the bearings and with an outer connection for a washing liquid.

## Revendications

1. Débitmètre pour liquides comprenant :
des roues de mesure rondes à denture droite (10, 12) engrenant en prise externe l'une avec l'autre ;
une chambre de mesure (3) dans un carter (2) avec deux couvercles (6, 8) dans chacun desquels est formée l'une des parois d'extrémité de chambre de mesure (5) ;
des axes fixes (14, 16) sur lesquels les roues de mesure (10, 12), dans la chambre de mesure, sont montées mobile en rotation ;
des conduits d'écoulement (32) dans au moins l'une des parois d'extrémité de chambre de mesure, les conduits d'écoulement débouchant dans la région d'engrènement des dents des roues de mesure (10, 12) de chaque côté du plan des axes (A) des deux roues de mesure, les conduits d'écoulement étant raccordés à une entrée et à une sortie (20) pour le liquide ;
une cloison (34) séparant les conduits d'écoulement (32), les bords (42) de la cloison étant sensiblement symétriques par rapport au plan des axes (A) ; et
un capteur à magnétorésistance différentiel servant de capteur magnéto-électrique et disposé dans l'une des parois d'extrémité de chambre de mesure dans la région des dents d'au moins une roué de mesure dans un trou pratiqué dans l'un des couvercles de carter ;
caractérisé en ce que :
les roues de mesure (10, 12), au moins du côté faisant face aux conduits d'écoulement (32), sont conformées avec, dans les espaces entre les dents, un évidement (40) qui s'étend radialement vers l'intérieur sur le cercle de pied et qui est symétrique par rapport à l'espace entre dents, la largeur (b) de l'évidement étant sensiblement égale à la largeur de l'espace entre dents dans la région du cercle de pied (G) des dents, l'évidement s'étendant depuis la face d'extrémité des dents et au moins sur une partie de la largeur (H) de la roue ; et
en ce que la cloison (34) est conçue de telle manière que, chaque fois qu'un espace entre dents des roues de mesure (10, 12) se trouve dans la position centrale dans le plan des axes, les bords (42) de la cloison coïncident sensiblement du point de vue de la forme avec les flancs (41, 39) avoisinant des dents adjacentes à l'espace entre dents dans la région entre la base de l'évidement et le cercle primitif (T) des dents, et en ce que la largeur de l'espace entre dents dans cette région est légèrement plus petite que la largeur de la cloison.

2. Débitmètre selon la revendication 1, caractérisé en ce que les évidements (40) sont formés avec des flancs (41) rectilignes parallèles.

3. Débitmètre selon la revendication 1, caractérisé en ce que les évidements (40) s'étendant sur toute la largeur (H) de la roue.

4. Débitmètre selon la revendication 1, caractérisé en ce que les évidements (40) s'étendent à partir des deux faces d'extrémité des roues de mesure et sont aplatis vers le milieu de la roue, au moins sur une partie de la largeur de roue (H).

5. Débitmètre selon la revendication 1, caractérisé en ce que les axes fixes (14, 16) traversent les deux couvercles (6, 8) et sont pourvus, aux deux extrémités, de butées (15', 17) qui viennent en butée par l'extérieur contre les couvercles.

6. Débitmètre selon la revendication 5, dans lequel les roues de mesure sont montées sur les axes par l'intermédiaire de paliers espacés respectifs, caractérisé en ce que l'axe (14) est conformé avec un trou axial (52) partant d'une extrémité et pourvu d'un trou transversal débouchant entre les paliers et d'un raccord extérieur pour un liquide de lavage.
